# EUROPEAN PATENT APPLICATION

(11) **EP 2 874 372 A1**
(43) Date of publication of application: **20.05.2015**
(21) Application number: 13306559.9
(22) Date of filing: 14.11.2013
(51) Int. Cl.: H04L 29/08

(54) **Delivering managed and unmanaged content across a network**

(71) Applicant: ALCATEL LUCENT, 92100 Boulogne-Billancourt (FR)
(72) Inventor: Kisel, Andrey, Cambridge, Cambridgeshire CB24 6DD (GB); Niven-Jenkins, Ben, Cambridge, Cambridgeshire CB24 6DD (GB); Berkeley, Anthony, Swindon, Wiltshire SN5 7DJ (GB); Stroud, Adrian, Cambridge, Cambridgeshire CB24 6DD (GB)
(74) Representative: Mills, Julia

(57) **Abstract**

A method of delivering content across a network, a computer program, content delivery server and network are disclosed. The method comprises: receiving a request for content at a transparent origin server located within a local network, said request comprising an identifier of an origin server storing said content and an identifier of said content, said origin server being located outside of said local network; determining if said content identifier is an exclusive content identifier for said content or if said content identifier is one of a plurality of coded content identifiers identifying a same content and if said content identifier is said one of said plurality of coded content identifiers, decoding said coded content identifier to generate an updated content identifier and replacing said coded content identifier with said updated content identifier; and redirecting said request to a content delivery server for delivering locally stored content, said content delivery server being located within said local network.

## Description

### FIELD OF THE INVENTION

The present invention relates to a method, apparatus and computer program for delivering both managed and unmanaged content across a network.

### BACKGROUND

When delivering content across a network web caching is often used to store and deliver the most popular content from the Service Provider network, rather than delivering the content from the Original content location on the Web. Service Providers and network operators deploy caching to reduce bandwidth over the peering link and improve QoE (quality of experience) for the subscribers. Content caching typically requires business relations between content owners and network operators. Content owners provide content (managed content) to the network operators, which the network operators cache and deliver to the subscribers from own Content Delivery Networks (CDNs) often called on-net CDNs. Such content can either be ingested into CDN for storage and delivery or it can be acquired from the origin content provider on demand (reverse-proxied).

There are several factors slowing broad on-net CDN adoption:
- Service Providers do not have enough own content or content delivery deals with content owners to make business case for CDNs;
- Content Providers are reluctant to enter content play directly with multiple Service Providers (except with selected large national Service Providers).
   Smaller T2 and T3 Service Providers are impacted the most by these limiting factors.

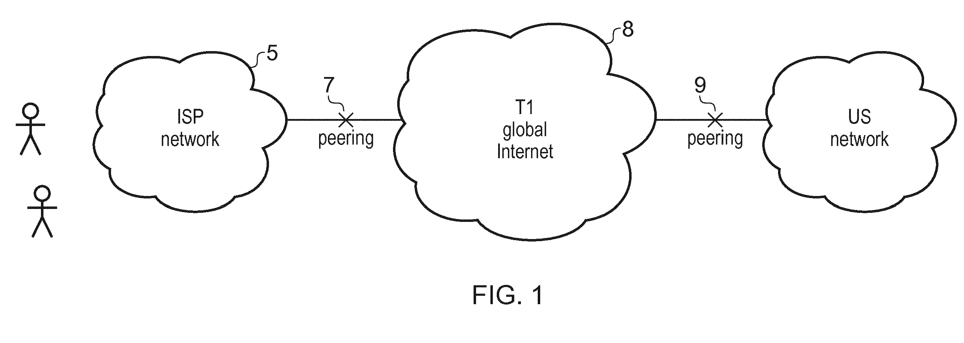

Figure 1 shows very schematically an SP network 5 which connects via a transit or peering point 7 with the global Internet and via other peering points 9 with other networks. These transit or peering points are network interconnections in data service centres with many servers and the Internet Service Providers pay money to global Internet Connectivity Providers in dependence on the traffic through the transit point. Thus, if there is popular content that is retrieved via these points, a fee will have to be paid each time it passes through the transit point. However, if the content can be cached locally, then the transit or peering cost can be significantly reduced.

Transparent caching has emerged recently as a new type of caching. Transparent caching automatically intercepts popular Web content and serves content requests from the local cache instead of transiting across the network and peering point to the Web location. By reducing demand on transit bandwidth and reducing delays, Service Providers and Network Operators can deliver better QoE especially during peak periods and reduce peering or transit costs. Service Providers often deploy transparent caching when business relations with the content owners are not possible for some reasons.

However, on-net CDNs and transparent caching are mostly being deployed as separate systems. While some level of integration is possible on the management level, the delivery capacity is often segregated between managed content and transparently cached content.

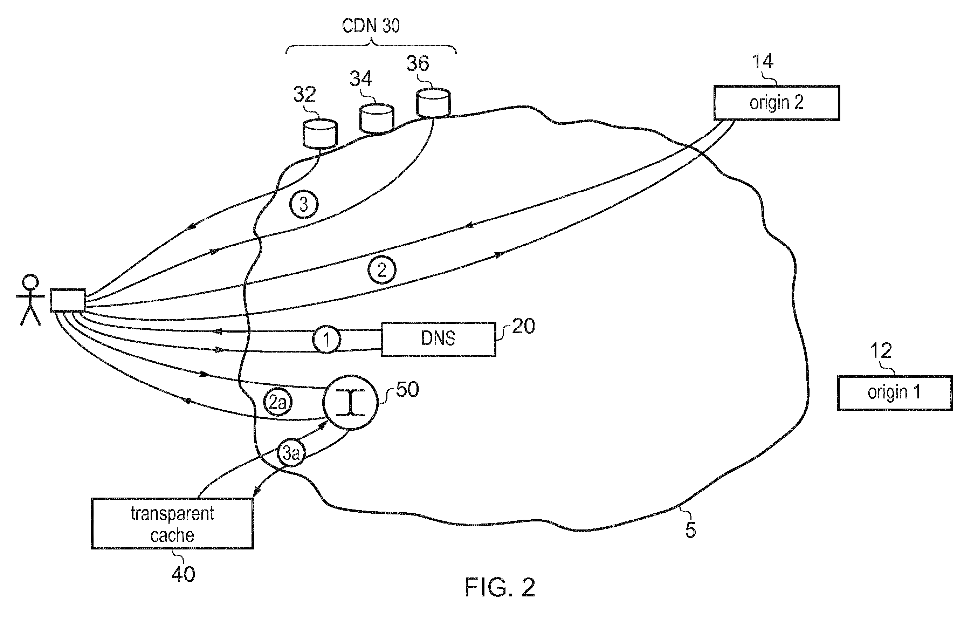

Figure 2 shows schematically a conventional system that employs both transparent caching and content delivery using a content delivery network 30. In this example network 5 has a contract with origin server 14 but no contract with origin server 12. A user request for content is directed by DNS server 20 (arrows 1) to the IP address of the relevant server (arrows 2), and in the case that the server is server 14 with whom the ISP has a contract, server 14 redirects the request to content delivery controller 36 (arrows 3) which determines where the content is stored within CDN 30 and serves the content. The origin server 14 will transmit the content to the CDN 30 as required.

Where the request is to origin server 12 with whom the ISP has no content delivery contract, then the request is intercepted at a service router 50 (arrows 2a) and is redirected to the cache 40 (arrows 3a) where it is determined if the content requested is popular content, and if so the content is stored and can be delivered from the cache. If the content is not deemed to be popular, or for other reasons the cache decides not to deliver from internal storage, then the request is simply forwarded to the origin server. In the case that the content is not currently stored in the transparent cache 39 but it is deemed to be popular then the content will be requested from the server 12 using the user request, and it will be intercepted and stored in the transparent cache 40. The transparent cache is transparent in that neither origin nor end user is aware of it, and also there is no relationship between the net provider and the content provider.

In this way, network 5 is able to store local copies of content and improve the quality of service that it provides to its users when delivering content. However, a drawback of this system is that there are two separate systems for delivering the content, the CDN delivering managed content from servers with whom it has a contract and the transparent cache delivering unmanaged or OTT (over the top) content from servers with which it has no contract.

It would be advantageous if a more efficient system could be found to deliver locally stored data.

### SUMMARY

According to a first aspect, there is provided a method of delivering content across a network comprising: receiving a request for content at a transparent origin server located within a local network, said request comprising an identifier of an origin server storing said content and an identifier of said content, said origin server being located outside of said local network; determining if said content identifier is an exclusive content identifier for said content or if said content identifier is one of a plurality of coded content identifiers identifying a same content and if said content identifier is said one of said plurality of coded content identifiers, decoding said coded content identifier to generate an updated content identifier and replacing said coded content identifier with said updated content identifier; redirecting said request to a content delivery server for delivering locally stored content, said content delivery server being located within said local network.

The present invention recognises that when delivering content across a network, this content may be stored at one or more locations on the network to reduce traffic across peering or transit points and allow increased content delivery capacity and speeds. This intermediate storage of content may be done in agreement with the content owner, in which case the content is referred to as managed content, or it may be done without the knowledge or agreement of the content owner, in which case the content is referred to as over the top OTT or unmanaged content. In the case that there is no agreement with the content owner, this local storage is achieved by intercepting the content that is being transmitted to a user in response to a request. Conventionally the local storage of these two types of content has been achieved in different ways, requiring individual systems for both types of content. The present invention seeks to address this duplication by using the content delivery network that exists for the delivery of managed content to also deliver unmanaged or OTT content.

This is achieved with a transparent origin server that acts as an intermediary to decode any coded content identifiers and to redirect these requests to a content delivery server which manages the delivery of this unmanaged content along with managed content. In this regard in some cases providers of content that do not have an agreement with a network for local storage may actively seek to avoid their content being stored locally by using cache avoidance techniques. These cache avoidance techniques generally involve coding the content identifier, such that the same content is identified in a number of different ways, making it difficult for a system that is intercepting and storing the content to recognise that same content. To address this, the transparent origin server is configured to decipher such coded content identifiers and to transmit an updated content identifier to the content delivery network such that if the content is currently stored it can be identified. This updated content identifier will identify the content in a standard way that allows the same content to be identified with the same identifier.

In this way the transparent origin server does not serve the users directly instead it decodes content identifiers where required and redirects received requests to a content delivery server, which can then process the requests in a similar way to the way that it processes requests for managed content.

In some embodiments, the method comprises the further step prior to performing said redirecting step of determining whether to redirect said request to said content delivery server in dependence upon characteristics of said content and only performing said redirecting step for a subset of said requests said subset being determined in dependence upon characteristics of said content.

The storage and serving of content from a local content delivery server may only be performed for certain content and thus, there may be a step where it is determined whether the request should be redirected to the content delivery server, if it is determined that it should not, the content will simply be delivered by the origin server. The local storage and delivery of content may be performed for popular content that is often requested as this will reduce traffic across the network and peering points significantly. The additional overheads of local storage may not be merited for content that is requested less often for example.

In some embodiments, the method comprises the further steps of
receiving said request at said content delivery server and
determining from said content identifier if said content is identified as being stored locally, and if so
outputting said content; and if not
transmitting said request to said transparent origin server.

The request that is received at the content delivery server is responded to by delivering the content, or if the content is not currently stored there the content is requested from the transparent origin. In this regard the request may have been received from the transparent origin itself in which case any coded content identifier will have been decoded, such that the content delivery server will be able to identify whether or not the content identified by that identifier is stored there. In other embodiments the request may come to the content delivery network not via the transparent origin, in which case the identifier may be a coded identifier, this is OK as the request is transmitted to the transparent origin if the content is not detected as being stored in the content delivery network and the transparent origin will be able to decode any coded identifiers.

In some embodiments, the method further comprises the further steps of:
following receipt of said request at said transparent origin server;
determining whether said requested content is stored locally within said transparent origin server, and if so
transmitting said content to said content delivery server, and if not
requesting said content from said origin server using said original content identifier.

The transparent origin will respond to a request for content by determining whether it is stored locally or not and if it is not it will transmit a request for the content to the origin server. Such a request will need to look as though it comes from a user therefore where the content identifier has been decoded, the original coded identifier will be used with the request. The transparent origin may respond to requests received from the content delivery server and redirected requests received from a user in this way, that is by requesting the content from the origin at the same time as it decodes the content identifier (if required) and forwards the request to the content delivery server.

In some embodiments the method comprises the initial steps of receiving said request for said content at said network from a user:
routing said request for said content to said origin server,
intercepting said request to said origin server, to analysing said origin server identifier of said intercepted request and in response to said origin server identifier indicating one of at least one predetermined origin servers, transmitting said request to said transparent origin server and then to said content delivery server.

In some cases all received requests may be sent to the respective origin server, and requests to origin servers with whom there is no contract maybe intercepted and the request maybe mirrored and sent to the transparent origin server. The request will then be redirected to the content delivery server by the transparent origin server, the transparent origin server decoding the content identifier prior to transmitting the request where required. It should be noted that in some cases all requests may be routed to the transparent origin server while in others only those to content that is deemed to be popular are intercepted, other requests simply being forwarded to the respective origin server.

In other embodiments, the method comprises the initial steps of receiving said request for said content at said network from a user;
routing said request for said content to said content delivery server or to said origin server in dependence upon said origin server identifier;
said origin server responding to receipt of said request by redirecting said request to said content delivery server, and transmitting said content to said content delivery server if said content delivery server does not currently store said content locally.

Requests received may alternatively be routed either to the origin server or to the content delivery network depending on the origin server identifier. In this regard where the origin server is known to be "friendly" that is to be a server with whom the content delivery network has an agreement, then the request can be sent directly to the origin server which will itself deliver the request and content to the content delivery network. Where the origin server is not one that has an agreement with the network, then the request is sent to the transparent origin server, that is configured to decode the content identifier and redirect the request to the content delivery server. The content delivery server may deliver content if stored locally or ask the transparent origin server for the content if the content is not currently stored locally. The "friendly" servers may be identified by a list, the "friendly" servers appearing on the list and all servers not on the list deemed to be "unfriendly".

A second aspect of the present invention provides method of delivering content across a network comprising:
receiving a request for content at a content delivery server, said request comprising an identifier of an origin server storing said content and an identifier of said content
determining from said content identifier if said content is identified as being stored locally, and if so
outputting said content; and if not
transmitting said request to a transparent origin server, that is configured to identify said content from said content identifier and request said content from said origin server.

The present technique provides a method of receiving a request at a content delivery server that is configured to respond to a request for content that it does not currently store locally by routing the request to a transparent origin server, the transparent origin server being configured to retrieve the data from the origin server. In this way a content delivery server that may store content from an origin server with which it has a contract can also be used to store data from an origin server with which it has no relationship by using an intermediate transparent origin server to retrieve the content. Thus, a system with increased efficiency can be provided that uses an amended content delivery network to deliver both managed and unmanaged content.

In some embodiments, the method comprises a further step of receiving an updated content identifier from said transparent origin server at said content delivery server and in response to identifying said content as being stored locally from said updated content identifier outputting said content.

In some embodiments, in response to not identifying said content as being stored locally from said updated content identifier, the method comprises the further step of receiving said content from said transparent origin server and storing said content within said content delivery server and identifying said stored content by said updated content identifier.

Where it is determined from the updated content identifier that the content is not currently stored, the content is retrieved via the transparent origin server and is then stored in association with the updated content identifier such that it can be identified by later requests.

In some embodiments, the method comprises the further step of prior to transmitting said request for content to said origin server amending said request such that it appears to be a request from a user.

Requests from the transparent origin server should be "transparent" to the origin which may not be minded to allow intermediate storage of its content. Therefore, the transparent origin will "spoof" a user request to retrieve the content from the origin server. When delivering the content it may well spoof the origin server such that both the content owner and user are unaware of the intermediate storage of the data.

A third aspect of the present invention provides a computer program which when executed by a computer controls said computer to perform steps in a method according to a first or second aspect of the present invention.

A further aspect of the present invention provides a computer program product comprising a computer program which when executed by a computer controls said computer to perform steps in a method according to a first or second aspect of the present invention.

A fourth aspect of the present invention provides a transparent origin server configured to receive a request for content, said request comprising an identifier of an origin server storing said content and an identifier of said content, said origin server being located outside of said local network;
said transparent origin server comprising decoding logic configured to decode said coded content identifier if said content identifier is determined to be one of a plurality of coded content identifiers, and to generate an updated content identifier for identifying said content exclusively and to replace said coded content identifier with said updated content identifier; and
redirecting circuitry for redirecting said request to a content delivery server for delivering locally stored content, said content delivery server being located within said local network.

As noted previously in order to deliver both managed and unmanaged content using the same mechanism, a transparent origin server maybe configured to decipher any coded content identifiers and route requests to a content delivery server for delivering the content. In this way the content can be delivered by the content delivery server whether it is managed or unmanaged content.

A fifth aspect of the present invention provides a content delivery server for delivering content to a user in response to a request for content said request comprising an identifier of an origin server storing said content and an identifier of said content, said content delivery server being configured to respond to receipt of said request for content, by:
determining from said content identifier if said content is identified as being stored locally, and if so
outputting said content; and if not
transmitting said request to a transparent origin server, that is configured to identify said content from said content identifier and request said content from said origin server.

A sixth aspect of the present invention provides a plurality of content delivery servers according to a fifth aspect of the present invention connected via a network, said plurality of content delivery servers comprising a plurality of content stores for storing said content and a content delivery controller for controlling storage of content on said plurality of content delivery servers;
said control delivery controller being configured to receive content from said origin server and said transparent origin server and to control storage of said content on said plurality of content delivery servers.

There may be a plurality of content delivery servers, some of which have local storage and one of which is a controller for controlling which of the content delivery servers having local storage should be used to store particular content. Content is considered to be stored locally if it is stored in any one of the content delivery servers.

A seventh aspect of the present invention provides a content delivery network comprising a network for connecting at least one user with said plurality of content delivery servers according to a sixth aspect and with said transparent origin server according to a fourth aspect.

A network is provided that uses content delivery servers and a transparent origin server to deliver content from origin servers either in cooperation with that server or in a way that is transparent to that server, thereby allowing both managed and unmanaged content to be stored locally and delivered by the same content delivery servers.

In some embodiments said network comprises a plurality of components, said plurality of components including said plurality of content delivery servers and said transparent origin server and further comprising:
a plurality of ports configured to provide access to said origin server storing said content and at least one of said ports configured to receive said requests for content from a user, said requests for content comprising an identifier of said origin server and an identifier of said content;
a service router for routing said requests, said service router being configured to intercept requests to said origin server and to redirect at least some of said requests to said transparent origin server.

The redirecting of requests to the transparent origin server may be performed by a service router which intercepts requests to origin servers with which the local network does not have a contract and transmits them to the transparent origin server. In this regard it may intercept all requests, determine which are to "unfriendly" origin servers and redirect just these. In some embodiments, when redirecting the requests it may mirror them in that a copy is sent to the transparent origin server, the other request continuing to the origin server, although in some embodiments this may not be the case and the requests may simply be diverted to the transparent origin server. The service router may also determine which requests are for certain sites and only redirect these to the transparent origin. In this regard it should be noted that the service router in general only redirects requests based on destination address, while the transparent origin server can redirect requests based on other properties such as content.

In some embodiments, said transparent origin server is configured to redirect said request to one of said plurality of content delivery servers and where said request is directed to one of said plurality of content delivery servers comprising a content store, said content being stored locally if said content is stored in said content store.

In other embodiments said transparent origin is configured to redirect said request to one of said plurality of content delivery servers that said request is directed to is said content delivery controller, said content being stored locally if said content is stored in one of said plurality of content delivery servers comprising said content stores.

Embodiments may transmit the request to a content delivery server having local storage and it may then be determined if the content is stored within this server. Alternatively, it may be transmitted to the content delivery controller that controls the storage in a plurality of content delivery servers, in which case the data is deemed to be stored locally if it is stored in any one of these servers as the controller can control the delivery of the content form any one of these servers.

An eighth aspect of the present invention provides a service router configured to receive requests for content directed to an origin server and to redirect at least some of said requests to a transparent origin server.

### BRIEF DESCRIPTION OF THE DRAWINGS

Embodiments of the present invention will now be described further, with reference to the accompanying drawings, in which:
Figure 1 schematically illustrates the interconnection of different networks within the global Internet;
Figure 2 illustrates a network for delivering content;
Figure 3a - c illustrates the network of embodiments of the present invention;
Figure 4 illustrates the end to end architecture including a network of an embodiment;
Figure 5 illustrates the functional architecture of a transparent origin server;
Figure 6 illustrates content delivery flow or an embodiment;
Figures 7 illustrates a flow diagram showing steps in a method for delivering content according to another embodiment; and
Figure 8 shows steps in a method which occur when the content delivery network does not store the content and requests the content from the transparent origin.

### DESCRIPTION OF THE EMBODIMENTS

### Overview

Before discussing the embodiments in any more detail, first an overview will be provided.

Embodiments provide content delivery servers which are provided within a network to deliver managed content; that is, content from content owners with whom the network has an agreement, and also to deliver content from content providers with whom the network does not have an agreement. Such content may be termed over the top, OTT or unmanaged content. This content is intercepted and the content owner and, indeed, the user may have no knowledge that the network has intercepted it and stored it locally on the content delivery network prior to providing it to the user. Embodiments achieve this using a transparent origin server that can apply a cache avoidance policy and turn multiple cache avoidance content identifiers all identifying the same content into a single content identifier for that content prior to delegating delivery to a content delivery network. In effect, the transparent origin turns unmanaged OTT content into managed content. This content can later be delivered by content delivery networks which also deliver managed content. This allows content delivery to managed by a single content delivery network of servers.

In embodiments, the transparent origin server may be configured to receive requests for unmanaged contents and to decipher any coded content identifiers and re-route the requests to the content delivery network, the transparent origin server will also request the content from the origin and provide it to the content delivery network where it can be stored with the decoded content identifier such that it can be provided via the content delivery network to users in the same way that managed content is provided.

In general it should be noted that the User: sends content requests and consumes content;
The DNS server: translates Origin name into IP address. Typically DNS server either resolves Origin name to the actual IP, or to statically preconfigured alternative IP address (eg the address of CDN controller).
Service Router: handles all network requests. Can send some of them to the original IP address, or send some of them instead to an alternative IP addresses, e.g. to the address of transparent origin. It does not generally have advanced logic to monitor content popularity or do cache avoidance.
Transparent Origin server: can have advanced logic to monitor content popularity and decide whether to serve request from CDN or just pass it through to the Origin. Can have logic to decode cache avoidance URL.
Delivery server: stores and delivers content to the end user. Generally does not have advanced logic to deal with cache avoidance URLs. It can request content that is not stored locally from the Origin or from the Transparent Origin.

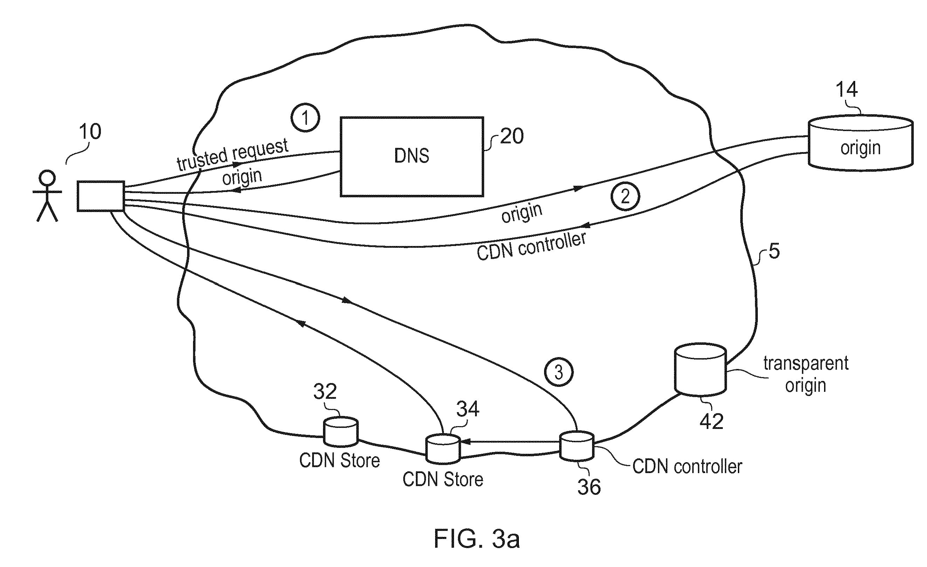

Figures 3a - c, shows a network according an embodiment of the present invention acting in response to different user requests.

Figure 3a shows the sequence of signals sent in response to a user request for content that is stored on an origin server 14 that network 5 has a trusted relationship with. Thus, user 10 transmits a request for content and DNS server 20 determines from the request the address of the origin server that stores the content and transmits this address back to user 10. User 10 then transmits the request with the origin address to the origin server 14, and the origin server 14 transmits back the address of the content delivery network controller 36. At this point, origin server 14 may determine whether or not the content delivery network is currently storing the content requested. In some cases, origin server may automatically transmit any new content that it receives to the content delivery network for storage, and in this case the origin server 14 will not need to determine whether or not the content is already stored, as it will know that it is. In alternative cases, the Origin server may automatically redirect all content requests to the content delivery network CDN. CDN can automatically acquire content from the Origin server when user requests the content, for example, using reverse proxy acquisition. The Origin server transmits the address of this controller back to user 10. The third set of signals is then sent, that is the request is re-routed from user 10 to the CDN controller 36. The CDN controller 36 determines which of the CDN delivery servers (more common name then content store) shown schematically as 32 and 34 are best placed to service this content. The decision to direct to one of the delivery servers may be based on content location, network proximity to user or other conditions. Whichever delivery server it determines meets these criteria will then serve the content to user 10. In this way, content can be retrieved from a delivery server that is closer to the user than origin server 14. This is how managed content is conventionally stored and delivered in the prior art.

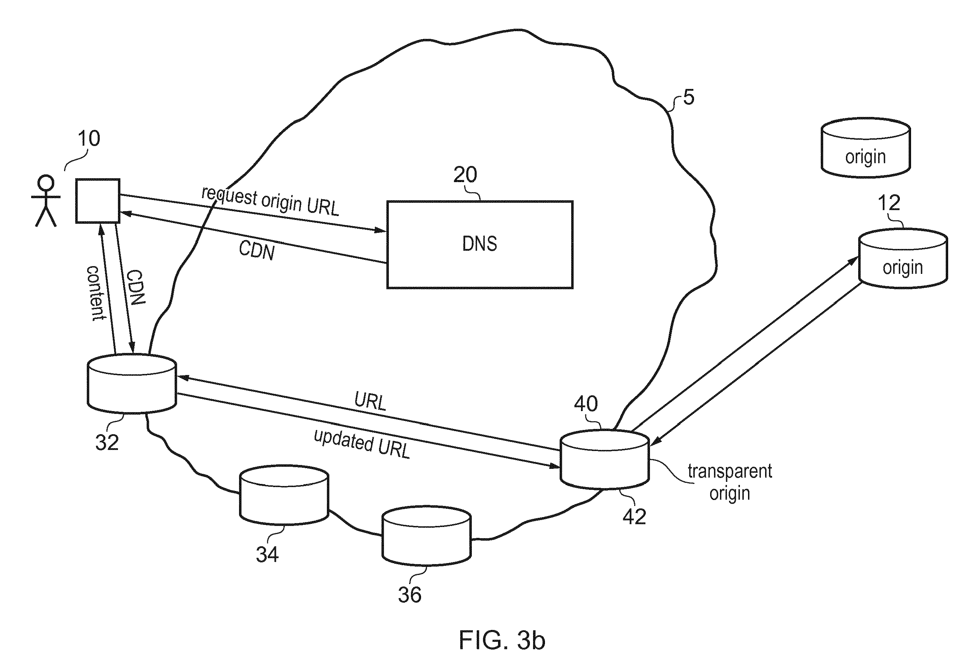

Figure 3b shows the same system responding to a request from user 10 for content that is owned by origin server 12 with whom the network 5 does not have a contract. In this embodiment, DNS 20 will send the address of the CDN 30 to the user 10. In this regard, it may send the address of one of the CDN delivery servers 32, 34 or of the CDN controller 36. In this case, it sends the address of delivery servers 32 and the request is then re-routed to the delivery servers 32. Delivery servers 32 determines if it is storing the content identified by the content identifier, which in this case is a URL Uniform Resource Locator, and if it determines that it is currently storing the content then it will deliver the content to user 10. If it determines that it is not currently storing the content then it will transmit a request to transparent origin server 40.

Transparent origin server 40 has logic within it which can decode coded URLs and identify the content. In this respect, origin servers that do not wish their content to be stored by content delivery networks with whom they have no agreement use cache avoidance techniques which involve coding URLs to make their content difficult to cache locally. These cache avoidance techniques involve the use of semi-dynamic or fully dynamic URLs which obfuscate the URL. In semi-dynamic URLs there is extensive use of dynamic query string parameters, the dynamic parameters being used to hide the string parameters which actually identify the content. Logic within transparent origin server 40 will analyse these URLs and identify the parameters that identify the content and will transmit an updated URL to the server that received the request. This updated URL will identify the content with an exclusive URL, that is one that is specific to that content and is the only identifier used by the transparent origin server and the content delivery servers to identify that content, and the content delivery server can then determine if it does currently store that content.

In the case that the URL is a fully dynamic URL, then the transparent origin will request the content from the origin by spoofing a user request and will analyse the start of the content and generate a characteristic value from this content, perhaps by hashing the first few bytes. It will then transmit this to the content delivery network which can then determine whether or not it has previously received and stored this content. If it is not currently storing the content, then content store 32 will retransmit the request to the transparent origin 40 which will request the content from origin 12, spoofing a user request, and will transmit this content to content store 32 which will store the content identified by the updated content identifier and deliver the content.

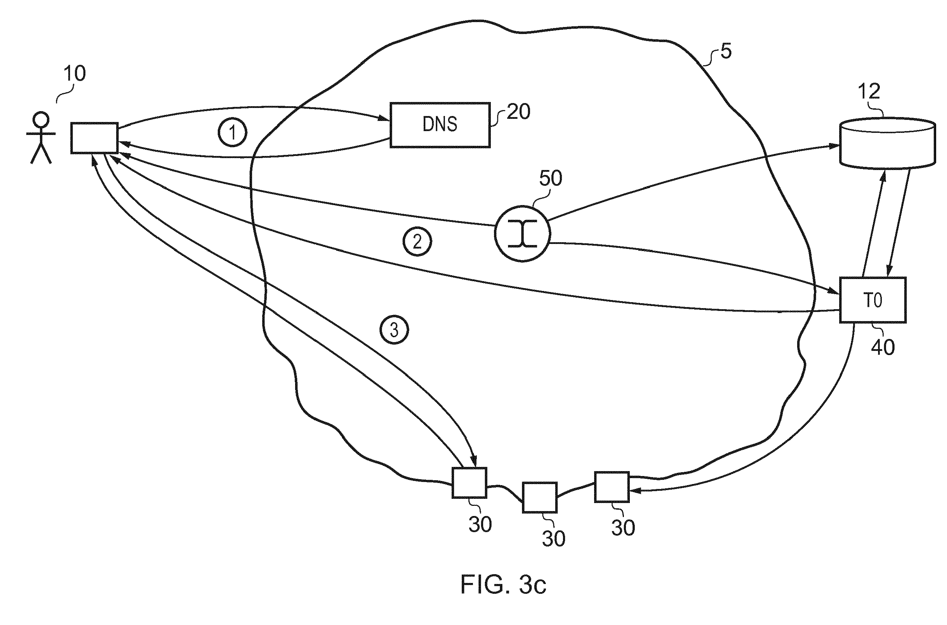

In an alternative preferred embodiment to that of figure 3b shown in Figure 3c, DNS 20 does not determine from the request whether the request is to an origin server with which it has a contract or to an "unfriendly" origin server but, rather, simply transmits the address of the origin server that owns the content regardless of its nature. In this case, there is a tap or service router 50 within network 5 which intercepts requests to all origin servers or to specific unfriendly origin servers and if the request is to an unfriendly origin server, it will either divert the request to the transparent origin, or send a copy of the request to the transparent origin server.

The transparent origin server may first determine if the request is for "popular" content, that is content that is requested often, and therefore should be delivered from the CDN, or if it can be delivered from the Origin. It may only redirect such "popular" requests to the CDN and simply forward other requests to the appropriate origin server. The transparent Origin redirects 'popular' requests, .via the user in this case to the content delivery network and with any coded content identifiers being decoded using the cache avoidance policies within decoding logic 42 within the transparent origin server 40.

The request with updated content identifier is thus, transmitted to the content delivery network 30 where it is determined if the content is stored locally. If it is, it is served to the user, if not, then a request is sent to the transparent origin server 40 from the content delivery network 30 and the transparent origin server transmits a spoofed request to the origin server, receives the content and then transmits it to the content delivery network 30. The spoofed request will use the original content identifier of the original request.

In this way, a network 5 with content delivery network servers 30 can deliver content both from origin servers with which it has a contract and from origin servers with which it has no contract, simply by the addition of a transparent origin server which includes logic 42 for deciphering content identifiers which have been coded to obfuscate the identity of the content.

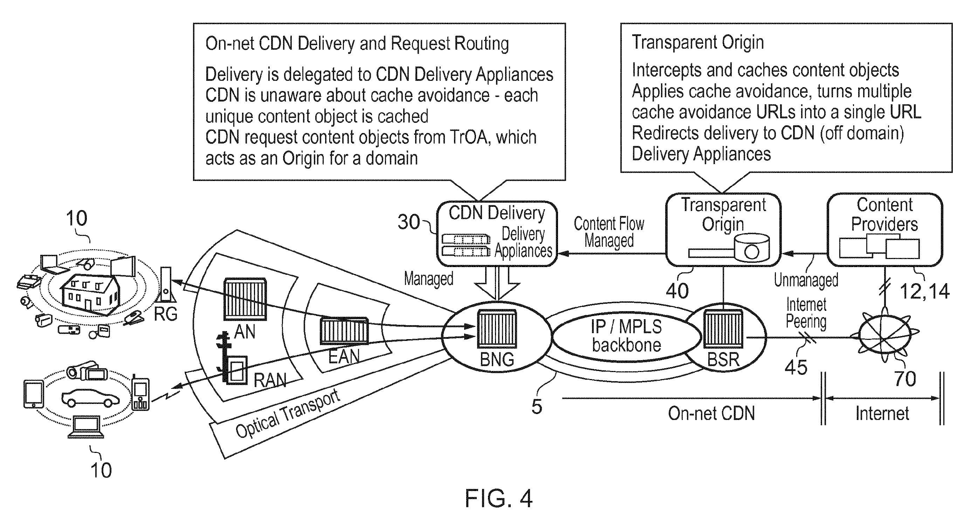

Figure 4 shows a high level end-to-end architecture diagram illustrating the role of the transparent origin server 40. In this embodiment, on-net delivery of content is delegated to CDN delivery appliances 30. These appliances are unaware of cache avoidance technique and simply cache content with content identifiers. Transparent origin server 40 has cache avoidance logic within it which monitors the URLs and translates multiple URLs that identify a single piece of content into a single URL that exclusively identifies each piece of content.

Figure 4 shows a plurality of users 10 that communicate via optical transport networks with the content delivery network 30 which is connected via an internet service provider's network 5 with a transparent origin server 40 and via an internet peering point 45 with the global internet 70. Content providers which correspond to the origin servers 12, 14 of Figure 3B can be accessed via the internet. The transparent origin server 40 serves to provide unmanaged content to the CDN delivery network. The CDN delivery network therefore receives unmanaged content from the transparent origin server 40 and managed content directly from the content providers 12, 14 and can be used to deliver both to users 10. In this way, efficient use of a content delivery network to provide both managed and unmanaged content is provided.

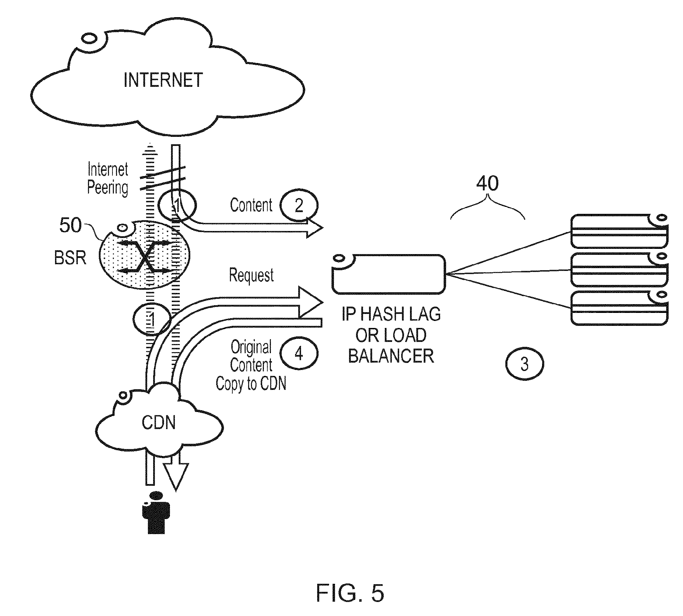

Figure 5 shows the transparent origin server's functional architecture in more detail. It corresponds to the embodiment of Figure 3C where there is a broadband service router 50 that intercepts requests. There are four main steps of operation firstly the broadband router 50 mirrors port 80 that is a port to subscriber backhaul Internet traffic to the transparent origin 40 and it caches the most popular unmanaged content. The transparent origin then applies cache avoidance techniques to create a single content name from the cache index as discussed above. The transparent origin 40 intercepts delivery for cached content requests and redirects to downstream on-net CDN. It asks the user or client to disconnect from the Web server and reconnect to CDN surrogates by inserting HTTP Redirect (302 message). It re-writes URLs with new single content name derived from cache index and it makes the client believe that the message has been originated at the Web server by 'spoofing' Web server.

The downstream on-net CDN illustrated in Figure 4 is configured to use transparent origin as content origin for newly created content URLs generated by the transparent origin. This may be achieved, for example, by assigning transparent origin as content origin for some of URL paths.

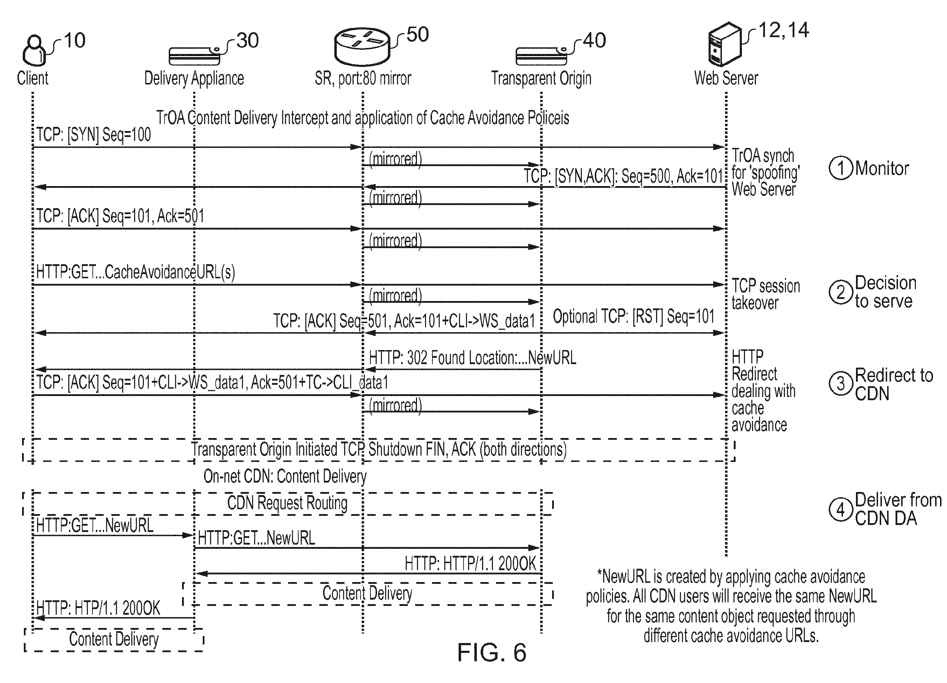

Figure 6 shows detailed content delivery flow from the web server to the end user. In this Figure, user is shown as the client, the delivery appliance is one of the CDN servers that caches the content, the SR port 80 is the broadband service router 50 of Figure 3C, the transparent origin is the transparent origin server and the web server is referred to as the origin server in Figure 3.

Initially, the client transmits a request to the web server. The first steps performed rely on spoofing the web server such that the transparent origin can communicate with the web server while the web server believes it is the client. Thus, service router 50 intercepts the request and mirrors it to the transparent origin while sending it to the origin web server at the same time. A response is sent from the web server and this too is intercepted and mirrored. Acknowledgement is then sent from the client which is also mirrored to the transparent origin. An address get command is then sent to the web server from the client which identifies the content with a ciphered URL which has been generated by the web server using cache avoidance techniques. This signal is again mirrored and sent to the transparent origin which will apply cache avoidance policies to generate a new URL for the same content object such that the same content is identified by a single URL. The content will then be requested using this URL by the client from the CDN, the content will be intercepted by the transparent origin at service router 50 and sent to the CDN for storage in conjunction with the new URL. Content will then be delivered from the CDN to the client.

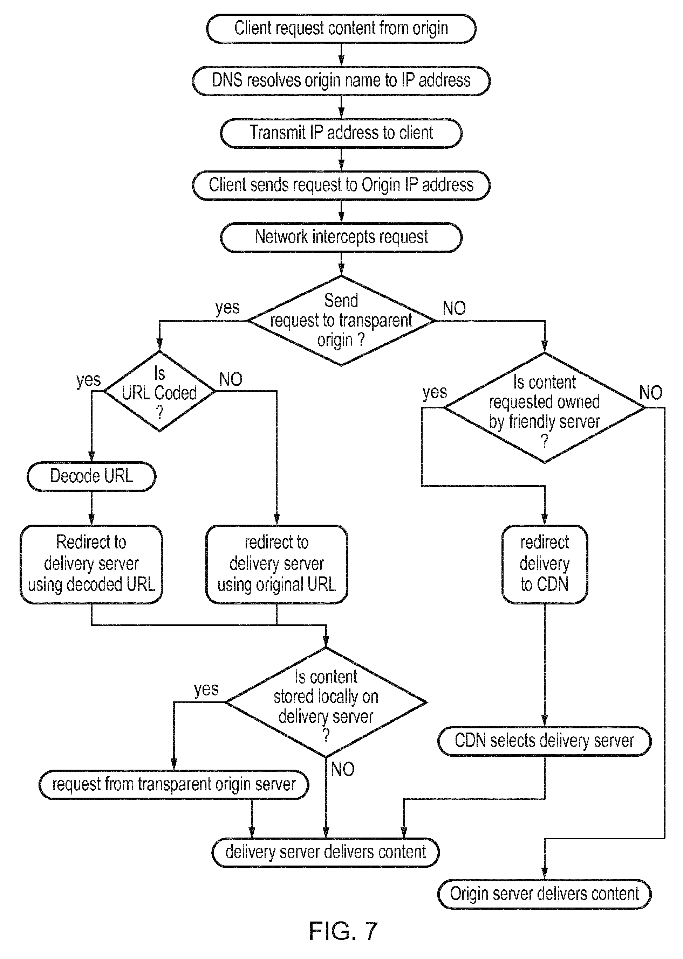

Figure 7 shows a flow diagram illustrating steps in a method for delivering content according to the network shown in Figures 3c. In this method, a request for content is transmitted to an address decoder (DNS 20 of Figure 3), the DNS resolves the origin name to an IP address and this is sent back to the client making the request and from there towards the origin server using the IP address. The service router 50 intercepts the request and it is determined if the request should be sent to the transparent origin or not. If it determines from the IP address of the request that this is not a request to be sent to the transparent origin then the request is sent to the origin server where if the origin server is friendly it will redirect the client to the content delivery network with which it has a contract either using DNS or HTTP redirect, and and the content is delivered from a delivery server in that content delivery network. If, however, the origin server is not friendly, i.e. does not have a contract with the local network of the user then the origin server will itself deliver the content to the user.

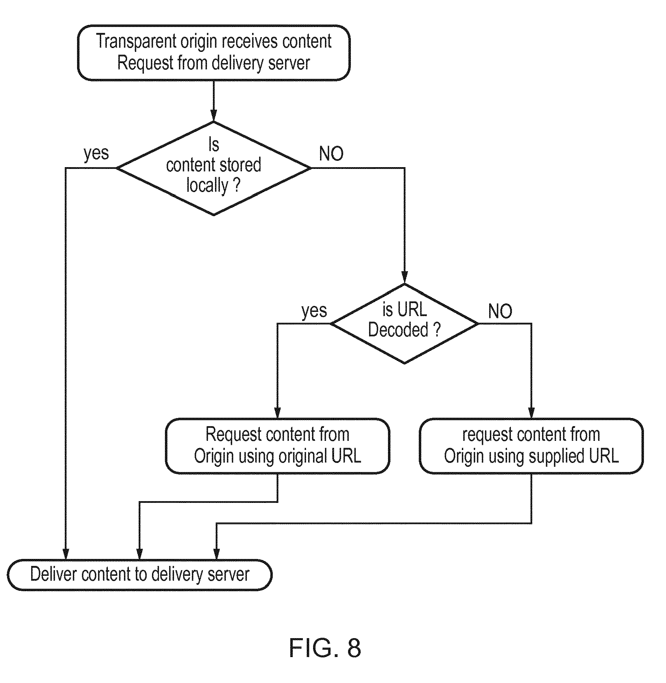

If, however, the service router 50 routes the request to the transparent origin server then the following steps occur. The transparent origin server determines whether or not the URL is coded. If it is, it decodes the URL using cache avoidance policies and transmits the decoded URL to the content delivery network which will then search for the content using the updated URL. If the URL is not coded then this is simply sent directly to the CDN. If the content cannot be found on the CDN then the content delivery network will request the content from the transparent origin which may request the content from the origin server (see Figure 8) and, will transmit the content to the CDN where it will be stored with the updated URL and output. If the content is however, stored locally then a delivery server in the CDN will output the content.

Figure 8, shows steps which occur when the content delivery network does not store the content and requests the content from the transparent origin. The transparent origin determines if it is storing the content locally and if it is it delivers the content to the content delivery network for delivery to the user via a delivery server. If it is not stored locally, it determines if the URL of the content request is decoded and if it is, then it request the content from the origin using the original URL (rather than the supplied URL), if the URL is not decoded then it requests the content from the origin using the supplied URL.

A person of skill in the art would readily recognize that steps of various above-described methods can be performed by programmed computers. Herein, some embodiments are also intended to cover program cache servers, e.g., digital data storage media, which are machine or computer readable and encode machine-executable or computer-executable programs of instructions, wherein said instructions perform some or all of the steps of said above-described methods. The program cache servers may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown. The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of delivering content across a network comprising:
receiving a request for content at a transparent origin server located within a local network, said request comprising an identifier of an origin server storing said content and an identifier of said content, said origin server being located outside of said local network;
determining if said content identifier is an exclusive content identifier for said content or if said content identifier is one of a plurality of coded content identifiers identifying a same content and if said content identifier is said one of said plurality of coded content identifiers, decoding said coded content identifier to generate an updated content identifier and replacing said coded content identifier with said updated content identifier; and
redirecting said request to a content delivery server for delivering locally stored content, said content delivery server being located within said local network.

2. A method according to claim 1, comprising a further step prior to performing said redirecting step of determining whether to redirect said request to said content delivery server in dependence upon characteristics of said content and only performing said redirecting step for a subset of said requests said subset being determined in dependence upon characteristics of said content.

3. A method according to any preceding claim, comprising the further steps of receiving said request at said content delivery server and
determining from said content identifier if said content is identified as being stored locally, and if so
outputting said content; and if not
transmitting said request to said transparent origin server.

4. A method according to any preceding claim, further comprising the further steps of:
following receipt of said request at said transparent origin server;
determining whether said requested content is stored locally within said transparent origin server, and if so
transmitting said content to said content delivery server, and if not
requesting said content from said origin server using said original content identifier.

5. A method according to any preceding claim, comprising the initial steps of receiving said request for said content at said network from a user:
routing said request for said content to said origin server,
intercepting said request to said origin server, analysing said origin server identifier of said intercepted request and in response to said origin server identifier indicating one of at least one predetermined origin servers, transmitting said request to said transparent origin server.

6. A method according to any one of claims 1 to 3,
comprising the initial steps of receiving said request for said content at said network from a user;
routing said request for said content to said content delivery server or to said origin server in dependence upon said origin server identifier;
said origin server responding to receipt of said request by redirecting said request to said content delivery server, and transmitting said content to said content delivery server if said content delivery server does not currently store said content locally.

7. A method of delivering content across a network comprising:
receiving a request for content at a content delivery server, said request comprising an identifier of an origin server storing said content and an identifier of said content
determining from said content identifier if said content is identified as being stored locally, and if so
outputting said content; and if not
transmitting said request to a transparent origin server, that is configured to identify said content from said content identifier and request said content from said origin server.

8. A computer program which when executed by a computer controls said computer to perform steps in a method according to any one of claims 1 to 7.

9. A transparent origin server configured to receive a request for content, said request comprising an identifier of an origin server storing said content and an identifier of said content, said origin server being located outside of said local network;
said transparent origin server comprising decoding logic configured to decode said coded content identifier if said content identifier is determined to be one of a plurality of coded content identifiers, and to generate an updated content identifier for identifying said content exclusively and to replace said coded content identifier with said updated content identifier; and
redirecting circuitry for redirecting said request to a content delivery server for delivering locally stored content, said content delivery server being located within said local network.

10. A content delivery server for delivering content to a user in response to a request for content said request comprising an identifier of an origin server storing said content and an identifier of said content, said content delivery server being configured to respond to receipt of said request for content, by:
determining from said content identifier if said content is identified as being stored locally, and if so
outputting said content; and if not
transmitting said request to a transparent origin server, that is configured to identify said content from said content identifier and request said content from said origin server.

11. A plurality of content delivery servers according claim 10 connected via a network, said plurality of content delivery servers comprising a plurality of content stores for storing said content and a content delivery controller for controlling storage of content on said plurality of content stores;
said control delivery controller being configured to receive content from said origin server and said transparent origin server and to control storage of said content on said plurality of content stores, said content being stored locally if said content is stored in one of said plurality of content stores.

12. A service router configured to receive requests for content directed to an origin server and to redirect at least some of said requests to a transparent origin server.

13. A content delivery network comprising a network for connecting at least one user with said plurality of content delivery servers according to claim 11 and with said transparent origin server according to claim 9.

14. A content delivery network according to claim 13, said network comprising a plurality of components, said plurality of components including said plurality of content delivery servers and said transparent origin server and further comprising:
a plurality of ports configured to provide access to said origin server storing said content and at least one of said ports configured to receive said requests for content from a user, said requests for content comprising an identifier of said origin server and an identifier of said content; and
a service router according to claim 12.

15. A content delivery network according to claim 13, wherein said transparent origin is configured to redirect said request to one of said plurality of content delivery servers that said request is directed to is said content delivery controller, said content being stored locally if said content is stored in one of said plurality of content delivery servers comprising said content stores.
